Europäisches Patentamt

European Patent Office

Office européen des brevets

(11) Veröffentlichungsnummer: **0 483 389 A1**

# EUROPÄISCHE PATENTANMELDUNG

(21) Anmeldenummer: **90120495.8**

(22) Anmeldetag: **25.10.90**

(51) Int. Cl.5: **B09B 1/00,** B09B 3/00,
C04B 14/40

(43) Veröffentlichungstag der Anmeldung:
**06.05.92 Bulletin 92/19**

(84) Benannte Vertragsstaaten:
**AT BE CH DE DK ES FR GB GR IT LI LU NL SE**

(71) Anmelder: **Hafner, Dieter, Dr.**
**Blumröderstrasse 23**
**W-8500 Nürnberg 30(DE)**

(72) Erfinder: **Hohenleitner, Herbert**
**Jordanstr. 12**
**W-8502 Zirndorf(DE)**

(74) Vertreter: **Hafner, Dieter et al**
**Dipl.-Phys. Dr. D. Hafner - Dipl.-Ing. H. Stippl**
**Ostendstrasse 132**
**W-8500 Nürnberg 30(DE)**

(54) Method of disposing of harmful substances, in particular asbestos materials.

(57) Um ein Verfahren zur endgültigen Entsorgung von zur Freisetzung lungengängiger Fasern fähiger Schadstoffe, insbesondere Asbestmaterialien anzugeben, das umweltverträglich ist, Gefährdungen für Mensch und Tier zukünftig weitgehend ausschließt und zugleich die vorteilhaften Grundeigenschaften des Asbestes in vorteilhafter Weise beim Deponierungsvorgang nutzen kann, werden zunächst die Schadstoffe zu einer Aufbereitungsanlage, in der das Schadstoffmaterial zunächst zerkleinert wird, angeliefert, sodann werden die zerkleinerten Schadstoffmaterialien zu einer Mischanlage verbracht, in der das Schadstoffmaterial einer Versatzpulpe für die Ausfüllung unterirdischer Hohlräume von Bergwerken beigemengt wird, die Versatzpulpe, die dann die Schadstoffe beinhaltet, wird in die zu verpulpenden Bergwerkhohlräume verbracht, in denen sie aushärtet und zur Stützung der Hohlräume dient.

EP 0 483 389 A1

Die Erfindung betrifft zunächst ein Verfahren zur Entsorgung von zur Freisetzung lungengängiger Fasern fähigen Schadstoffen, insbesondere Asbestmaterialien.

Stand der Technik:

Der Name Asbest ist der griechischen Sprache entnommen und hat die Bedeutung "unauslöschlich" oder "unvergänglich". Diese Bedeutungen spielen auf die chemischen und physikalischen Eigenschaften von Asbest an, die sich in vieler Hinsicht als günstig erwiesen haben. Asbest ist säure- und laugenbeständig, hitzebeständig, hat eine hohe thermische Isolationsfähigkeit und ist nicht zuletzt unbrennbar. Deswegen wurde in der Vergangenheit Asbest sehr vielseitig und vielschichtig insbesondere im Bauwesen eingesetzt.

Zum einen wurde Asbest als sog. Spritzasbest verbaut, Spritzasbestschichten wurden in Bauwerke zum Brandschutz, zur Schall- und Wärmedämmung und/oder zum Feuchtigkeitsschutz eingebaut.

Das Spritzasbestmaterial hat eine relativ geringe Rohdichte. Darüber hinaus wurden noch beachtliche Mengen anderer Asbestmaterialien unterschiedlicher Rohdichte hergestellt und eingesetzt, nämlich Spritzasbestputze, Asbestmatten, Asbestschnüre, Asbestdichtungen, Asbestschaum, Asbestkleber, Asbestplatten für Wand-, Decken-, und Dachbeläge, asbesthaltige Vinylbodenplatten und asbesthaltige Feuerschutzplatten.

Die Gefahr, die von Asbestmaterialien ausgeht, ist umso größer, je leichter die Materialien gebunden sind. Eine kritisch Grenze wird zum gegenwärtigen Zeitpunkt bei einer Rohdichte von Asbestmaterialien von 98,0 kN/cm³ gesehen. Es gibt aber auch eine Vielzahl von Materialien, die eine weit geringere Rohdichte haben, beispielsweise von nur 39 kN/cm³. Je geringer die Rohdichte der Asbestmaterialien ist, desto höher ist das Faserfreisetzungspotential. Die Gefährdung, die von Asbestmaterialien ausgeht, wird von der medizinischen Fachwelt damit begründet, daß Asbestfasern lungengängig sind, d. h. beim Einatmen sich in den Lungenfibrillen festsetzen und dort langfristig die sog. AsbestoseKrankheit hervorrufen, eine Krankheit, die tödlich verläuft. Eine einzige Faser genügt zur Auslösung der Asbestose.

In der Zukunft ist davon auszugehen, daß im Bauwesen verwendete Asbestmaterialien steigende Umweltbelastungen mit sich bringen, da natürliche Alterungsprozesse, mechanische Einwirkungen sowie thermische und klimatische Einflüsse eine fortschreitende Auflösung und damit Faserfreisetzung der Oberflächenstruktur von Asbestverkleidungen und Asbestschichten an Gebäuden bewirken werden.

Das Problem der Entsorgung von Gebäuden wird als technisch gelöst angesehen, auch ist Asbest per se ein relativ harmloser Abfall, so lange er nur staubsicher verpackt ist. Asbest ist nicht giftig, nicht brennbar und gibt bei Ablaugungsprozessen keinerlei schädliche Stoffe ab. Asbest ist Abfall gemäß § 2Abs. 2 des Abfallbeseitigungsgesetzes als Sonderabfall bzw. besonders überwachungsbedürftiger Abfall einzustufen und fällt somit grundsätzlich als Ablagerung auf Sondermülldeponien an. Bei entsprechenden örtlichen Voraussetzungen ist mit Zustimmung der zuständigen Behörden auch eine Ablagerung auf bestimmten Bauschutt- oder Hausmülldeponien zulässig, wenn diese ensprechende Bereiche ausgewiesen haben. Jedoch ist die Kapazität aufnahmebereiter Deponien stark rückläufig.

Zum gegenwärtigen Zeitpunkt wird Asbest nach folgenden Verfahren entsorgt:

Das Asbestmaterial wird aus den zu entsorgenden Gebäuden entfernt, zerkleinert und dann in Form eines Asbestzementbreies auf Deponien gebracht. Der Asbestzementbrei hat nach Aushärtung eine Oberfläche, die Asbestmaterialien beinhaltet und deswegen im Falle einer Verwitterung auch wieder Fasern freisetzt. Man ist zwar in der Lage, Asbestmaterialien, die vorher eine relativ geringe Rohdichte hatten und deswegen als besonders gefährlich einzustufen waren, höhergewichtig zu binden, so daß zumindest die Faserfreigabebereitschaft der Oberfläche reduziert ist. Es läßt sich jedoch nicht ohne weiteres sicherstellen, daß bei langfristiger Verwitterung wiederum Asbestfasern in die Luft gelangen und die bekannten Gefährdungserscheinungen hervorrufen. Zum gegenwärtigen Zeitpunkt ist es deswegen Vorschrift, Asbestzementbreiklumpen, die auf Deponien lagern, zusätzlich noch zu überdecken, was insgesamt ein sehr deponiebelastendes und aufwendiges Entsorgungsverfahren ist.

Es ist darüber hinaus bereits versucht worden, die Asbestrückstände einzuhüllen, beispielsweise wurden Kunststoffkisten, Kunststoffhäute oder -Folien oder fest haftende dichte Anstriche diskutiert. Diese Verfahren können aber ebenfalls nicht als umweltfreundlich angesehen werde, weil sie die Deponien zusätzlich belasten, zumal insbesondere durch Kunststoffumhüllungen oder dergleichen zusätzliche Umweltprobleme auftreten. Darüber hinaus sind Kunststoffumhüllungen in Folienform auch gegen leichte mechanische Einwirkung äußerst anfällig.

Eine weitere bekannte Entsorgungsmethode sieht das sog. Verglasen von Asbest vor. Dieses Verfahren ist zum gegenwärtigen Zeitpunkt noch in der Erprobungsphase. Das Verfahren sieht eine Verschmelzung von asbesthaltigem Material und Glasgranulat in einem Schmelzofen vor. Die zähflüssige Glas-Asbestmaterialschmelze wird in eine Wasservorlage verdüst, dort findet ein Abschrekkungsprozeß statt, der zu einem Glas- Asbestgranulat führt, der Asbest ist weitgehend eingeschlossen. Allerdings ist auch bei diesem Verfahren nicht 100%ig sichergestellt, daß keine Asbestfasern an den Glasoberflächen wieder freigesetzt werden. Die Bindungen der Fasern im Granulat sind jedoch sehr gut. Der große Nachteil an diesen bekannten Verfahren ist darin zu sehen, daß zur Durchführung des Verfahren hohe Energien aufzuwenden sind, wodurch die Wirtschaftlichkeit des Verfahrens stark in Frage gestellt ist.

Aufgabenstellung:

Der Erfindung liegt die Aufgabe zugrunde, ein Verfahren zur endgültigen Entsorgung von zur Freisetzung lungengängiger Fasern fähigen Schadstoffen, insbesondere Asbestmaterialien anzugeben, das umweltverträglich ist, Gefährdungen für Mensch und Tier in Zukunft weitgehend ausschließt und zugleich die vorteilhaften Grundeigenschaften des Asbests in vorteilhafter Weise beim Deponierungsvorgang nutzt.

Lösung der Aufgabe:

Diese Aufgabe wird dadurch gelöst, daß
a) die Schadstoffe, insbesondere der Asbest zunächst zu einer Aufbereitungsanlage angeliefert werden, in der das Schadstoffmaterial zunächst zerkleinert wird. Dies kann durch Walzen, Mühlen und dergleichen geschehen.
b) Sodann wird das zerkleinerte Schadstoffmaterial einer Mischanlage zugeführt, in der das Schadstoffmaterial einer Versatzpulpe für die Ausfüllung unterirdischer Hohlräume von aufgelassenen Bergwerken beigemengt wird.
c) Schließlich wird die die Schadstoffe beinhaltende Versatzpulpe in die Bergwerkhohlräume eingefüllt und dort verdichtet, sie bindet ab und ist damit endgültig so aufgehoben, daß Kontakt mit der Umwelt nicht mehr stattfinden kann. Beispielsweise bieten sich bereits stillgelegte oder notwendigerweise stillzulegende Uranbergwerke im Gebiet Thüringen und Sachsen als Deponien an. Diese Bergwerke mit einer enormen Flächenausdehnung unter Tage müssen versetzt werden, um Einsturzgefahren zu reduzieren. Zum gegenwärtigen Zeitpunkt beträgt die täglich eingebrachte Versetzmenge allein in dem Bereich der angesprochenen Bergwerke 3000 - 4000 cm$^3$.

Als weiterer Stand der Technik ist es bereit bekanntgeworden, in Bergwerken, beispielsweise in Salzbergwerken radioaktive Abfälle einzulagern. Diese Einlagerung von Problemabfällen in Bergwerken geschieht aber nicht dadurch, daß die Problemabfälle in eine Versatzpulpe kommen, im Gegenteil, die Bergwerke bleiben zugänglich, die Problemabfälle sind in Containern oder Fässern gelagert und es ist vorgesehen, daß eines Tages diese Lager wieder aufgelassen werden und die Problemabfälle auf andere Weise endgültig entsorgt werden.

Zum Einbringen der Versatzpulpe werden von über Tage Bohrungen in die unter Tage liegenden Abbauebenen eingebracht, in die Bohrungen Stahlrohre eingebaut. An den Stahlrohren sind Versatzkeller mit Verfülltrichtern angebaut, über die die Versatzpulpe mit Transportmischfahrzeugen übergeben wird. Man erreicht eine vertikale Förderung von 600m, die horizonale Förderung etwa bis 2000m.

Es sind unterschiedliche Rezepturen für Versatzpulpe bekannt, beispielsweise verwendet man beim Stand der Technik für einen cm$^3$ Pulpe 1200 kg Kiessand, 1040 Kg Zement, ca. 260 kg Braunkohlenfilterasche und ca. 2001 Wasser. Daraus resultiert eine durchschnittliche Wichte von ca. 2,0 t/cm$^3$. Dieses Pulpenrezept ist gekennzeichnet von einer relativ hohen Gleitfähigkeit.

Das Asbestmaterial, das nun in derartige Mixturen eingebracht werden soll, ist ein ausgezeichnetes Füllmaterial, seine eingangs erwähnten Eigenschaften wirken sich nicht negativ, sondern sogar positiv aus, die mechanische Belastbarkeit der mit Asbestmaterialien als Füllstoffe versehenen Versatzpulpe nach dem Aushärtevorgang ist hervorragend, so daß die angestrebte Stützwirkung dauerhaft gegeben ist. Ein ungewolltes Wiederzutragetreten des Asbestes ist so gut wie ausgeschlossen, die Deponierung des Asbestmaterials auf diese Weise kann wirklich als "endgültig und abschlossen" bezeichnet werden.

Unter Umständen kann es vorteilhaft sein, wenn die Schacht- und Stolleneingänge der aufgelassenen Bergwerke mit einer schadstofffreien Versatzpulpenschicht überdeckt werden. Dann sind auch die letzten zur Faserfreisetzung noch geeigneten Flächen überdeckt, eine Gesundheitsgefährdung von im Umfeld der Schächte lebenden Lebewesen ist so gut wie ausgeschlossen.

Im Falle von genutzten Grundwasserströmungen kann es vorteilhaft sein, die schadstoffbelastete Versatzpulpe in Tiefen unterhalb des jeweiligen Grundwasserhorizontes einzubringen. Dies erscheint insoweit machbar, als die Grundwasserhorizonte in der Regel nicht tiefer als 180 - 200 m liegen und Bergwerkanlagen bekannt sind, die Schachttiefen bzw. Stollenlagen bis zu einer Tiefe von 1000m aufweisen.

Besonders vorteilhaft ist es, wenn die Aufbereitung, d. h. die Zerkleinerung des Schadstoffmaterials und die Mischung mit der Versatzpulpe unmittelbar im Bereich der zu verschließenden Hohlräume geschieht. Dies ist zum einen wirtschaftlich, da dann die Pulpe nicht über lange Strecken mit Transportfahrzeugen gefördert werden muß, zum anderen ist es zweckdienlich, wenn asbestverarbeitende Anlagen räumlich relativ eng zusammengefasst sind. Vorteilhaft ist es ferner, wenn die Aufbereitungsanlage ein abgeschlossenes System ist, welches zumindest bereichsweise mit Unterdruck beaufschlagt wird. Bereichsweise Unterdruckbeaufschlagung bietet sich dann an, wenn Asbest beispielsweise im trockenen Zustand vermahlen wird. Es kann aber auch besonders vorteilhaft sein, bereits beim Zerkleinerungsvorgang das Versatzpulpenwasser zumindest anteilig zuzuführen, da dann eine Verstaubung der Umgebung mit Asbestfasern weitgehend ausgeschlossen werden kann. Beispielsweise könnten die Zerkleinerungsanlagen unter einem Wasservorhang oder einer Wasserverdüsung angeordnet sein.

Ansprüche 11 - 16 betreffen eine Versatzpulpe, die Asbestabbruchmaterialien als Füllstoff enthält. Die Asbestmaterialien sollen bis zu einem maximalen Teiledurchmesser von etwa 20 cm zerkleinert sein, um eine hohe Gleitfähigkeit der Pulpe zu gewährleisten. Besonders vorteilhaft ist es, wenn die Pulpe sehr fein zerkleinerte Asbestanteile enthält, beispielsweise mit der Korngröße der ebenfalls in der Pulpe befindlichen Braunkohlenfilterasche, da dann das Asbest in sehr vorteilhafter Weise als Gleitmittel eingesetzt werden kann.

Beispielhafte Versatzpulpenrezeptur: 800 kg Asbestabbruchmaterial, 400 kg Kiessand, 1040 kg Zement, 260 kg Braunkohlefilterasche, 200 Liter Wasser.

**Patentansprüche**

1. Verfahren zur Entsorgung von zur Freisetzung lungengängiger Fasern fähigen Schadstoffen, insbesondere Asbestmaterialien in Form von Asbestabbruchmaterialien und dergleichen,

gekennzeichnet durch folgende Verfahrensschritte:

- Anlieferung der Schadstoffe zu einer Aufbereitungsanlage, in der das Schadstoffmaterial zunächst zerkleinert wird,

- Verbringen des zerkleinerten Schadstoffmaterials zu einer Mischanlage, in der das Schadstoffmaterial einer Versatzpulpe für die Ausfüllung unterirdischer Hohlräume von Bergwerken beigemengt wird,

- Einbringung der Schadstoffe beinhaltenden Versatzpulpe in die Bergwerkhohlräume.

2. Verfahren nach Anspruch 1,

dadurch gekennzeichnet,

daß die Schacht- und Stolleneingänge der aufgelassenen Bergwerke mit einer schadstofffreien Versatzpulpenschicht überdeckt werden.

3. Verfahren nach Anspruch 1 oder 2,

dadurch gekennzeichnet,

daß die Versatzpulpe in Tiefen unterhalb des jeweiligen Grundwasserhorizontes eingebracht wird.

4. Verfahren nach einem der Ansprüche 1 - 3,

gekennzeichnet durch

Herstellung einer schadstoffmaterialhaltigen Versatzpulpe mit einem spezifischen Mindestgewicht von etwa 100 kN/cm$^3$.

5. Verfahren nach einem der vorhergehenden Ansprüche,

dadurch gekennzeichnet,

daß der Versatzpulpe in an sich bekannter Weise Kiessand beigemengt ist und ein Teil der üblichen Kiessandbeimengungen durch die Schadstoffmaterialien als Füllstoffe ersetzt ist.

6. Verfahren nach einem der vorhergehenden Ansprüche,

dadurch gekennzeichnet,

daß die Aufbereitung (Zerkleinerung des Schadstoffmaterials, Mischung der Versatzpulpe, Weiterleitung der Versatzpulpe) unmittelbar bei den zu verschließenden Schächten geschieht.

7. Verfahren nach Anspruch 6,

gekennzeichnet durch

Verwendung einer schienengebundenen, transportablen Aufbereitungsanlage.

8. Verfahren nach einem der vorhergehenden Ansprüche,

   dadurch gekennzeichnet,

   daß die Zerkleinerung des Schadstoffmaterials und die Mischung mit den restlichen Pulpenmaterialien innerhalb eines zusammenhängenden abgeschlossenen Systems vollzogen wird.

9. Verfahren nach Anspruch 8,

   dadurch gekennzeichnet,

   daß das abgeschlossene System zumindest bereichsweise mit Unterdruck beaufschlagt wird, um eine Faserfreisetzung in die Umwelt zu vermeiden.

10. Verfahren nach Anspruch 8,

    dadurch gekennzeichnet,

    daß sich das geschlossene System bis über die Schachteingänge erstreckt.

11. Versatzpulpe zur Einbringung in die Hohlräume aufgelassener Bergwerke,

    dadurch gekennzeichnet,

    daß sie Asbestabbruchmaterialien als Füllstoff enthält.

12. Versatzpulpe nach Anspruch 11,

    dadurch gekennzeichnet,

    daß die Asbestmaterialien bis zu einem maximalen Teiledurchmesser von etwa 20cm zerkleinert sind.

13. Versatzpulpe nach einem der vorhergehenden Ansprüche,

    dadurch gekennzeichnet,

    daß die Summe der Asbestanteile und der in der Versatzpulpe vorhandenen Kiessandanteile 0,8 - 1,3 t/m³ Pulpe beträgt.

14. Versatzpulpe nach einem der vorhergehenden Ansprüche 11 -13,

dadurch gekennzeichnet,

daß der Asbestanteil bis zu 1 t Asbest/m$^3$ Pulpe beträgt.

15. Versatzpulpe nach einem der vorhergehenden Ansprüche 11 - 14

    dadurch gekennzeichnet,

    daß sie fein zerkleinerte Asbestanteile enthält, die zusammen mit in der Pulpe enthaltenen Wasseranteilen einen Gleitfilm für in der Pulpe befindliche grobere Bestandteile bilden.

16. Zerkleinerte Asbestabbruchmaterialien,

    gekennzeichnet durch

    ihre Verwendung als Füllstoff und Gleitmittelbeimengung in der Versatzpulpe für aufgelassene Bergwerkhohlräume.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-4865488 (HUSTON ET AL)<br>* Spalte 1, Zeile 44 - Spalte 2, Zeile 3 *<br>* Spalte 3, Zeile 29 - Spalte 4, Zeile 28 *<br>* Spalte 4, Zeilen 55 - 66 *<br>* Spalte 5, Zeilen 18 - 23 *<br>* Spalte 6, Zeilen 12 - 29 *<br>* Spalte 8, Zeilen 10 - 25; Figuren * | 1, 8 | B09B1/00<br>B09B3/00<br>C04B14/40 |
| Y | | 9 | |
| A | | 7, 11, 16 | |
| Y | EP-A-0357928 (DUST UMWELTSCHUTZTECHNIK GMBH)<br>* das ganze Dokument * | 9 | |
| A | | 1, 7, 8 | |
| X | SOVIET INVENTIONS ILLUSTRATED, Week C21<br>2 july 1980, abstract nr. 37859C/21<br>Derwent Publications Ltd., London GB;<br>&SU-A-688650 (TOMSK ENG-CONS INST) 01-10-1979 | 11 | |
| A | | 1, 16 | RECHERCHIERTE SACHGEBIETE (Int. Cl.5 ) |
| A | US-A-4705429 (NATALE)<br>* Spalte 1, Zeilen 7 - 11 *<br>* Spalte 6, Zeile 56 - Spalte 7, Zeile 23 *<br>* Spalte 8, Zeile 50 - Spalte 9, Zeile 20 *<br>* Spalte 11, Zeilen 8 - 47; Figuren * | 1, 2 | B09B<br>E21F<br>C04B |
| A | DE-A-3824383 (KNOBEN)<br>* Spalte 1, Zeilen 3 - 30 *<br>* Spalte 2, Zeilen 10 - 32; Figuren * | 1, 6-9 | |
| A | EP-A-0107269 (W.B. BLACK & SONS (HOLDINGS) LTD.)<br>* das ganze Dokument * | 1, 7-9 | |
| A | US-A-3887462 (LAGESS ET AL)<br>* Zusammenfassung * | 1 | |

Der vorliegende Recherchenbericht wurde für alle Patentansprüche erstellt

| Recherchenort | Abschlußdatum der Recherche | Prüfer |
|---|---|---|
| DEN HAAG | 14 JUNI 1991 | VAN DER ZEE W.T. |